# EUROPEAN PATENT APPLICATION

(11) **EP 4 400 624 A1**
(43) Date of publication of application: **17.07.2024**
(21) Application number: 22887479.8
(22) Date of filing: 19.10.2022
(51) Int. Cl.: C22C 38/26, C22C 38/28, C22C 38/00, C21D 8/02, C21D 9/46, B23K 20/00

(54) **FERRITIC STAINLESS STEEL WITH EXCELLENT CLAD SHEET WORKABILITY, AND MANUFACTURING METHOD THEREFOR**

(30) Priority: 25.10.2021 KR 20210143016
(71) Applicant: POSCO Co., Ltd, Pohang-si, Gyeongsangbuk-do 37859 (KR)
(72) Inventor: PARK, Jieon, Pohang-si Gyeongsangbuk-do 37671 (KR); PARK, Minam, Pohang-si Gyeongsangbuk-do 37669 (KR)
(74) Representative: Nederlandsch Octrooibureau
(86) International application number: PCT/KR2022/015951
(87) International publication number: WO 2023/075283

(57) **Abstract**

The present invention relates to a ferritic stainless steel with excellent clad sheet workability, comprising: by wt%, 0.0005-0.02% of C, 0.005-0.02% of N, 0.01-1.0% of Si, 0.01-1.0% of Mn, 0.001- 0.05% of P, 10.0-25.0% of Cr, 0.01- 0.5% of Nb, 0.01-0.5% of Ti, and the balance of Fe and inevitable impurities, having an average R-bar value of R values for respective directions is at least 1.5, and having a roughness height after sheet cladding of 25 *µ*m or less. In addition, the present invention relates to a method of manufacturing a ferritic stainless steel. The process involves continuous casting to create a slab with the specified composition, followed by hot rolling at 800-1250 °C; hot annealing same at 900-1050 °C, and then cold rolling same with a reduction ratio of 70% or more; and performing final cold annealing at a temperature of 800-950 °C for less than 1 hour.

## Description

### [Technical Field]

The disclosure relates to a ferritic stainless steel with excellent clad plate workability and method of manufacturing the same, which is a technology for improving material quality and workability by controlling the alloy composition.

### [Background Art]

Ferritic stainless steel is used a lot for home appliances such as washing machines, refrigerators, etc., and even for cooking utensils such as pots, rice cookers, etc., due to lower prices and fine surface quality as compared to austenitic stainless steel. The pot, rice cooker, etc., in particular uses the ferritic stainless steel a lot by considering harmfulness of the existing Al and a demand for high functionality such as luxurious surface and an induction heater. However, when only the ferritic stainless steel is used, it weighs a lot and heat conductivity is low as compared to the existing Al, so there are many disadvantages for cooking. Hence, to make this improved, more and more pots or rice cookers are made by being clad in the stainless steel and Al or Cu.

However, in processing the clad plate, there are problems with occurrence of processing cracks and bends due to materials having different physical properties. Accordingly, there is a need for developing a ferritic stainless steel with superior clad plate processability.

### [Disclosure]

### [Technical Problem]

The disclosure is to solve the above problems and aims to improve material quality and clad plate workability through optimization of steel composition.

### [Technical Solution]

According to an embodiment of the disclosure, a stainless steel includes, in % by weight, 0.0005 to 0.02% of C, 0.005 to 0.02% of N, 0.01 to 1.0% of Si, 0.01 to 1.0% of Mn, 0.001 to 0.05% of P, 10.0 to 25.0% of Cr, 0.01 to 0.5% of Nb, 0.01 to 0.5% of Ti, and the remainder having Fe and unavoidable impurities, wherein an average R-bar value of R values for respective directions is at least 1.5 (where average R-bar value refers to (R₀ + 2R₄₅ + R₉₀)/4) and height of bends after clad plate processing is 25 *µ*m or less.

According to another embodiment of the disclosure, a method of manufacturing a stainless steel includes manufacturing a slab including, in % by weight, 0.0005 to 0.02% of C, 0.005 to 0.02% of N, 0.01 to 1.0% of Si, 0.01 to 1.0% of Mn, 0.001 to 0.05% of P, 10.0 to 25.0% of Cr, 0.01 to 0.5% of Nb, 0.01 to 0.5% of Ti, and the remainder having Fe and unavoidable impurities through a continuous casting process; hot-rolling the manufactured slab at a range of 800 to 1250 °C; performing hot rolling annealing at a temperature range of 900 to 1050 °C followed by cold-rolling with a reduction rate of at least 70%; and performing final cold rolling annealing at a temperature range of 800 to 950 °C for less than 1 hour.

### [Advantageous Effects]

According to the disclosure, a ferritic stainless steel with superior clad plate workability may be manufactured.

### Brief Description of Drawings

FIG. 1 is a picture of bends occurrence and cross-sectional tissues after pot forming of a clad plate.

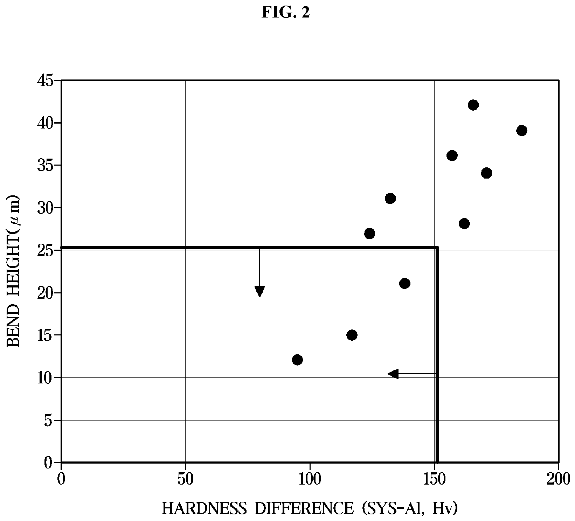

FIG. 2 is a graph illustrating bend heights according to hardness differences between stainless and Al.

### Best Mode

According to an embodiment of the disclosure, a stainless steel includes, in % by weight, 0.0005 to 0.02% of C, 0.005 to 0.02% of N, 0.01 to 1.0% of Si, 0.01 to 1.0% of Mn, 0.001 to 0.05% of P, 10.0 to 25.0% of Cr, 0.01 to 0.5% of Nb, 0.01 to 0.5% of Ti, and the remainder having Fe and unavoidable impurities, wherein an average R-bar value of R values for respective directions is at least 1.5 (where average R-bar value refers to (R₀ + 2R₄₅ + R₉₀)/4) and height of bends after clad plate processing is 25 *µ*m or less.

### Modes

### [Stainless steel]

According to an embodiment of the disclosure, a stainless steel includes, in % by weight, 0.0005 to 0.02% of C, 0.005 to 0.02% of N, 0.01 to 1.0% of Si, 0.01 to 1.0% of Mn, 0.001 to 0.05% of P, 10.0 to 25.0% of Cr, 0.01 to 0.5% of Nb, 0.01 to 0.5% of Ti, and the remainder having Fe and unavoidable impurities, wherein an average R-bar value of R values for respective directions is at least 1.5 (where average R-bar value refers to (R₀ + 2R₄₅ + R₉₀)/4) and height of bends after clad plate processing is 25 *µ*m or less.

A unit of wt% will now be used unless otherwise mentioned. The term "include (or including)" or "comprise (or comprising)" is inclusive or open-ended and does not exclude additional, unrecited elements or method steps, unless otherwise mentioned.

### (Ranges of ingredients)

### Carbon C: 0.0005 to 0.02%

The amount of carbon C is at least 0.0005% and equal to or less than 0.02%. When the amount of carbon C is less than 0.0005%, the price of refining to make a high-purity product is expensive, and when the amount exceeds 0.02%, impurities in the material increase, leading to a drop in elongation rate and corrosion resistance.

### Nitrogen N: 0.005 to 0.02%

The amount of nitrogen N is at least 0.005% and equal to or less than 0.02%. When the amount of nitrogen N is less than 0.005%, TiN crystallization decreases and thus, the equiaxed crystal ratio of the slab is lowered, and when it exceeds 0.02%, impurities in the material increase, causing a drop in elongation rate and corrosion resistance.

### Silicon Si: 0.01 to 1.0%

The amount of silicon Si is at least 0.01% and equal to or less than 1.0%. When the amount of silicon Si is less than 0.01%, the price of refining to make a high-purity product is expensive, and when the amount exceeds 1.0%, hardness of the material overly increases, workability drops and bends are made.

### Chrome Cr: 10.0 to 25.0%

The amount of chrome Cr is at least 10.0% and equal to or less than 25.0%. When the amount of chrome Cr is less than 10.0%, corrosion resistance and strength are reduced, when it exceeds 25.0%, the burden of rising prices increases.

### Manganese Mn: 0.01 to 1.0%

The amount of manganese Mn is at least 0.01% and equal to or less than 1.0%. When the amount of manganese Mn is less than 0.01%, the refining price increases, and it exceeds 1.0%, impurities in the material increase, leading to a decrease in elongation rate.

### Phosphorus P: 0.001 to 0.05%

The amount of phosphorus P is at least 0.001% and equal to or less than 0.05%. Phosphorus P is an impurity unavoidably contained in steel, and is a major element that causes intergranular corrosion during pickling or impairs hot workability, so it is desirable to control the content as low as possible. However, when it is controlled to less than 0.001%, the refining price increases, and when it exceeds 0.05%, the elongation rate and the work hardening index are lowered due to an increase in impurities.

### Niobium Nb: 0.01 to 0.5%

The amount of niobium Nb is at least 0.01% and equal to or less than 0.5%. When the amount of niobium Nb is less than 0.01%, crystal grains grow too much and the R value decreases as in comparative examples 1 to 4 below, and when it exceeds 0.5%, workability decreases and it costs a lot.

### Titanium Ti: 0.01 to 0.5%

The amount of titanium Ti is at least 0.01% and equal to or less than 0.5%. When the amount of titanium Ti is less than 0.01%, crystal grains grow too much and the R value decreases as in comparative examples 1 to 4 below, and when it exceeds 0.5%, there are increasing defects due to Ti-based inclusions.

### (characteristics)

An average value of R values for respective directions is calculated to be R-bar=(R₀+2R₄₅+R₉₀)/4), which is desirably at least 1.5. When the R-bar value is less than 1.5, processing cracks in the clad plate occur frequently, and the height of the bends increases after forming the clad plate.

Furthermore, in the disclosure, the difference in cross-sectional hardness between two materials after bonding with Al may be 50 to 150 Hv. When the hardness difference is less than 50 Hv, processing cracks in clad plate occur frequently, and when the hardness difference exceeds 150 Hv, local necking may occur periodically in ferritic stainless steel due to uneven deformation of Al in clad plate processing even when the R-bar value is at least 1.5, so that bends are formed on the surface.

### [Method of manufacturing stainless steel]

According to an embodiment of the disclosure, a method of manufacturing a stainless steel includes manufacturing a slab including, in % by weight, 0.0005 to 0.02% of C, 0.005 to 0.02% of N, 0.01 to 1.0% of Si, 0.01 to 1.0% of Mn, 0.001 to 0.05% of P, 10.0 to 25.0% of Cr, 0.01 to 0.5% of Nb, 0.01 to 0.5% of Ti, and the remainder having Fe and unavoidable impurities through a continuous casting process;
hot-rolling the manufactured slab at a range of 800 to 1250 °C;
performing hot rolling annealing at a temperature range of 900 to 1050 °C followed by cold-rolling with a reduction rate of at least 70%; and
performing final cold rolling annealing at a temperature range of 800 to 950 °C for less than 1 hour.

Embodiments of the disclosure will now be described in more detail.

The following embodiments are provided to deliver the idea of the disclosure to those of ordinary skill in the art, but the disclosure is not limited to the embodiments and may be implemented in other forms.

### (Embodiments)

The stainless steel of embodiments 1 to 3 and comparative examples 1 to 7 was manufactured by manufacturing a steel having ingredients in table 1 below into a slab through continuous casting, hot-rolling at a range of 800 to 1250 °C, performing hot rolling annealing at a temperature range of 900 to 1050 °C, cooling with a reduction rate of at least 70% and performing final cool rolling annealing at a temperature range of 800 to 950 °C for less than 1 hour, and was measured in terms of R-bar, hardness difference and curve height, which are shown in table 2 below.

The R-bar value was obtained by processing tensile specimens in directions of 0 °, 45 °, and 90 ° with respect to the rolling direction, doing a 15% tensile test and measuring an R value (Lankford value). It was calculated as an average of R values measured for the respective directions, i.e., R-bar value = (R₀ + 2R₄₅ + R₉₀)/4.

The hardness difference was obtained as a difference in Vickers hardness between cross-sections of two materials after bonding with Al, and the measurement of Vickers hardness was performed by using an HV-114 Vickers hardness tester manufactured by Mitutoyo.

The bend height was measured by using a Mitutoyo surface roughness measuring instrument under the conditions of λc = 8 and n = 2.

**[Table 1]**

| Steel grade | C | N | Si | Mn | P | Cr | Nb | Ti | section |
|---|---|---|---|---|---|---|---|---|---|
| A | 0.01 51 | 0.01 14 | 0.3 | 0.4 | 0.02 | 18.1 | 0.00 2 | 0.00 4 | Steel grade of comparative example |
| B | 0.01 04 | 0.00 83 | 0.2 | 0.5 | 0.03 | 17.8 | 0.00 3 | 0.00 2 | |
| E | 0.00 92 | 0.00 90 | 0.2 | 0.4 | 0.02 | 22.4 | 0.04 | 0.21 | Steel grade of embodiment |
| F | 0.00 96 | 0.01 10 | 0.3 | 0.5 | 0.02 | 18.2 | 0.30 | 0.05 | |
| G | 0.01 34 | 0.00 97 | 0.3 | 0.5 | 0.02 | 16.4 | 0.12 | 0.18 | |

**[Table 2]**

| section | Steel grade | R-bar | Hardness difference (STS-Al, Hv) | Curve height (*µ*m) |
|---|---|---|---|---|
| Embodiment 1 | E | 1.92 | 95 | 12 |
| Embodiment 2 | F | 1.75 | 138 | 21 |
| Embodiment 3 | G | 1.98 | 117 | 15 |
| Comparative example 1 | A | 1.24 | 124 | 27 |
| Comparative example 2 | B | 1.35 | 132 | 31 |
| Comparative example 3 | A | 1.07 | 157 | 36 |
| Comparative example 4 | B | 1.18 | 166 | 42 |
| Comparative example 5 | E | 1.84 | 162 | 28 |
| Comparative example 6 | F | 1.72 | 185 | 39 |
| Comparative example 7 | G | 1.92 | 171 | 34 |

Embodiments 1 to 3 secured at least 1.5 of R-bar value by satisfying the alloy composition range and manufacturing conditions of the disclosure and controlled the hardness difference to be 50 to 150 Hv, thereby manufacturing a clad plate with superior workability that has 25 *µ*m or less of curve occurrence.

On the other hand, it could be seen that comparative examples 1 to 4 had less than 1.5 of R-bar value, so processing cracks occurred frequently in the clad plate and after forming the clad plate, the height of the bends increased to at least 25 *µ*m.

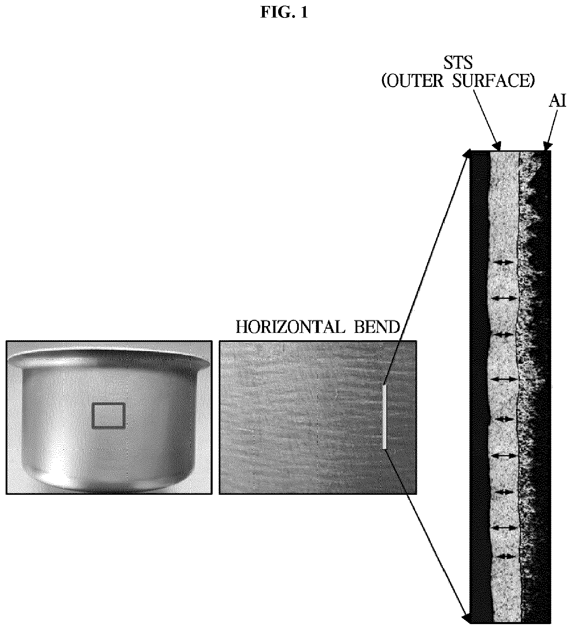

Furthermore, it could be seen that in comparative examples 5 to 7 where the hardness difference exceeded 150 Hv, even when the R-bar value was at least 1.5, periodical local necking occurred in the ferritic stainless steel due to uneven deformation of Al in clad plate processing, causing formation of bends on the surface (see FIG. 1).

### [Industrial Applicability]

According to the disclosure, a ferritic stainless steel with superior clad plate workability that may reduce occurrence of cracks and bends may be manufactured, so the industrial applicability is acknowledged.

## Claims

1. A ferritic stainless steel with superior clad plate workability, the ferritic stainless steel comprising:
in % by weight, 0.0005 to 0.02% of C, 0.005 to 0.02% of N, 0.01 to 1.0% of Si, 0.01 to 1.0% of Mn, 0.001 to 0.05% of P, 10.0 to 25.0% of Cr, 0.01 to 0.5% of Nb, 0.01 to 0.5% of Ti, and the remainder having Fe and unavoidable impurities, wherein an average R-bar value of R values for respective directions is at least 1.5 (where average R-bar value refers to (R₀ + 2R₄₅ + R₉₀)/4) and height of bends after clad plate processing is 25 *µ*m or less.

2. The ferritic stainless steel of claim 1, wherein a hardness difference from Al after the clad bonding is 50 to 150 Hv.

3. A method of manufacturing a ferritic stainless steel with superior clad plate workability, the method comprising:
manufacturing a slab including, in % by weight, 0.0005 to 0.02% of C, 0.005 to 0.02% of N, 0.01 to 1.0% of Si, 0.01 to 1.0% of Mn, 0.001 to 0.05% of P, 10.0 to 25.0% of Cr, 0.01 to 0.5% of Nb, 0.01 to 0.5% of Ti, and the remainder having Fe and unavoidable impurities, through a continuous casting process;
hot-rolling the manufactured slab at a range of 800 to 1250 °C;
performing hot rolling annealing at a temperature range of 900 to 1050 °C followed by cold-rolling with a reduction rate of at least 70%; and
performing final cold rolling annealing at a temperature range of 800 to 950 °C for less than 1 hour.
